# EUROPEAN PATENT SPECIFICATION

(11) **EP 2 061 220 B1**
(45) Date of publication and mention of the grant of the patent: **07.03.2012**
(21) Application number: 08102651.0
(22) Date of filing: 17.03.2008
(51) Int. Cl.: H04M 1/725, H04M 1/247

(54) **Method of configuring telephone softkeys**
Verfahren zur Konfigurierung von Telefontasten
Procédé pour la configuration de touches de téléphone programmables

(30) Priority: 16.11.2007 US 985797
(43) Date of publication of application: 20.05.2009
(73) Proprietor: Mitel Networks Corporation, Ottawa, ON K2K 2W7 (CA)
(72) Inventor: Erb, Paul Andrew, Ontario K1N 6M5 (CA)
(74) Representative: Pisani, Diana Jean

(56) References cited:
- WO-A1-2005/112408
- GB-A- 2 310 567

## Description

### BACKGROUND

### 1. Field

This specification relates generally to communication systems, and more particularly to the presentation and configuration of softkeys on a telephone device.

### 2. Description of the Related Art

As used herein, "telephone device" includes analog telephones, digital telephones, IP phones, mobile phones, PC desktop phone applications (i.e. softphones), trading turret appliances, and any other similar communication device.

It is known in the art to present softkeys on telephone devices to provide context specific behaviours/features to a telephone device user. The position of a softkey that has been programmed for a specific behaviour/feature is pre-determined to ensure that it does not interfere or conflict with different uses of the key and to ensure that the position is consistent with conventional telephone usage. Each device state (e.g. Idle, Busy, Dialing, etc.) may be associated with different configurations of softkeys to provide context specific behaviours/features. Consistent positioning of softkeys to provide context specific behaviours/features allows for predictable system operation and provides for commonality of telephone user interface (TUI) operation for different device types and users.

It is also conventional to use a single softkey position for multiple behaviours/features that are associated with the softkey according to a prioritized ordering related to device state. For instance, a number of IP phones manufactured by Mitel Networks Corporation provide 'Phonebook' and 'Speak@Ease' features, each of which is associated with the same softkey position when the set is in the Idle state. The 'Speak@Ease' softkey is only presented if the feature is available and a user preference has been configured for it. Otherwise, the 'Phonebook' softkey is presented at the identical softkey position when the IP phone is in the idle state.

Additionally, a user (or the communication system itself) may configure a telephone device so as to override the softkeys provided as system defaults. When overridden, alternate softkeys are usually provided (typically user configured). Once overridden, the system does not provide context sensitive softkeys but instead provides the alternate softkeys. For example, a 'Personal Idle Softkeys' feature is supported on the model 5235 telephone device manufactured by Mitel Networks Corporation. This feature allows a user to configure the presentation of desired softkeys when the telephone device is in the Idle state (instead of presenting default context specific behaviour/feature softkeys normally provided by the system).

Since the number of softkeys that may be presented on a telephone device is limited (based on the device type), it is advantageous to avoid reserving positions for features/behaviours that are not available to a specific user/device when the device is in a specific state (i.e. always blank), so that the positions may be used for other features/behaviours appropriate to the specific device state. Also, in some device states feature conflicts may preclude presentation of softkeys for certain desirable behaviours/features. Additionally, some features/behaviours for which it may be desirable to associate context sensitive softkeys may not be available unless managed by the system.

The foregoing limitations are particularly acute in the context of "float keys" on a "trading turret" appliance, such as the model 5560 telephone device manufactured by Mitel Networks Corporation, which is a specialized telephone device often used by stock and bond traders. "Float keys" are used on trading turrets to provide access to ringing calls (without requiring the trading turret to have a physical key for each line). Typically, six dedicated keys are configured on the turret appliance for use as "float keys", while the softkeys are left blank or are reserved for features that are not important on a trading turret. A hardware redesign is necessary in order to increase the number of available float keys on a turret appliance.

WO 2005/112408 A1 discloses a terminal in which a user can assign preferred functions, such as "menu", "calendar", "camera" and so on, to softkeys utilized in various active operating profiles of the terminal, such as "indoors", "outdoors", "conference" and "car". Meanwhile, GB 2 310 567 A discloses a radiotelephone in which a user can assign functions to softkeys for presentation when the device is in an idle mode.

### SUMMARY

It is an object of an aspect of this specification to set forth a method of configuring personal softkeys with context specific behaviours/features by a user/application, while identifying and selectively overriding configuration conflicts.

According to an aspect of the invention, a method of configuring and presenting softkeys on a device comprises creating a softkey profile for assigning a feature to a softkey on said device for each of a plurality of device states and presenting said softkey on said device for each of said device states, wherein creating said softkey profile includes dereferencing a list of supported device states for said device and, for each said device state:
i) determining an applicable system softkey for a softkey position in the device state;
ii) determining whether said applicable system softkey is mandatory for the device state;
iii) if said applicable system softkey is mandatory, performing conflict resolution on any softkey availability conflict between said feature and said applicable system softkey to determine whether said applicable system softkey is to be allocated to the softkey position in the device state and, if said applicable system softkey is not to be allocated to the softkey position in the device state, indicating that a failure has occurred; and
iv) determining a next applicable system softkey for the softkey position in the device state and repeating steps ii) and iii) for the next applicable system softkey.

In this manner, the configuration of shared softkeys can be coordinated between user/applications configuration and system context specific features/behaviours, thereby ensuring availability of mandatory system-provided context specific behaviour/features and context sensitive behaviour/features configured by the user/applications. Device state dependent and/or a call-by-call capability may be provided to change softkey behaviour/features.

This aspect also provides a communication system, comprising a plurality of devices, each having a plurality of softkeys for implementing features, and a controller connected to said devices for creating a softkey profile to assign a predetermined feature to a softkey on each said device for each of a plurality of device states, and presenting said softkey on each said device for each of said device states, the controller being configured to, when creating the softkey profile, dereference a list of supported device states for said device and, for each said device state,
i) determine an applicable system softkey for a softkey position in the device state;
ii) determine whether said applicable system softkey is mandatory for the device state;
iii) if said applicable system softkey is mandatory, perform conflict resolution on any softkey availability conflict between said feature and said applicable system softkey to determine whether said applicable system softkey is to be allocated to the softkey position in the device state and, if said applicable system softkey is not to be allocated to the softkey position in the device state, indicate that a failure has occurred; and
iv) determine a next applicable system softkey for the softkey position in the device state and repeat steps ii) and iii) for the next applicable system softkey.

In an exemplary embodiment, a softkey profile is associated with a user, a device type, a device state and/or any combination thereof. The softkey profile identifies the configuration of each softkey and a softkey management algorithm to be applied, thereby managing the presentation of context specific features on available softkeys. Additionally, a softkey conflict resolution mechanism is set forth.

The foregoing and other aspects and advantages are more fully hereinafter described and claimed, reference being had to the accompanying drawings, wherein like numerals refer to like parts throughout.

### BRIEF DESCRIPTION OF THE DRAWINGS

Figure 1 is a block diagram of an exemplary communication system;

Figure 2 shows an exemplary IP phone configured for operation in accordance with an aspect of an embodiment;

Figure 3 shows an exemplary trading turret configured for operation in accordance with an aspect of an embodiment;

Figure 4 is a flowchart showing method steps for configuring softkeys of the telephone devices shown in Figures 2 and 3, according to an aspect of an embodiment; and

Figure 5, comprising Figures 5A, 5B and 5C, is a flowchart showing method steps for presenting softkeys on the telephone devices of Figures 2 and 3 that have been configured in accordance with the steps of Figure 4, according to another aspect of an embodiment.

### DETAILED DESCRIPTION OF THE PREFERRED EMBODIMENTS

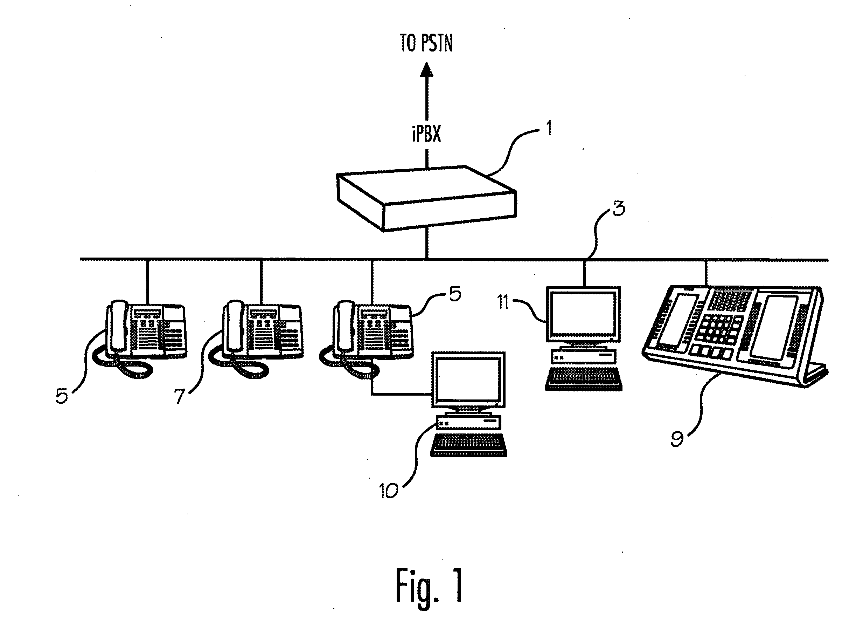

With reference to Figure 1, an exemplary communication system is shown comprising a communication switch such as an IP PBX otherwise known as an iPBX 1 (e.g. Mitel 3300 ICP or Mitel SX-200 ICP) connected to a local area network (LAN 3) and to the Public Switched Telephone Network (PSTN) (not shown). A plurality of telephone devices such as IP phones 5 and 7 (e.g. model 5220 and 5320 IP phones manufactured by Mitel Networks Corporation), a trading turret 9, a desktop computer 10 running phone and/or desktop applications, etc. are connected to the LAN 3, as well as an Administrator Console 11.

A person of skill in the art will appreciate that the configuration of Figure 1 is representative of a typical converged communication network, and that numerous variations in configuration, components, etc. are possible. Also, as discussed below, the principles set forth herein may be extended to systems other than telephony system wherein the feature-providing functionality of iPBX 1 may be performed by any other suitable controller for implementation on any suitable device (i.e. not limited to a telephone device).

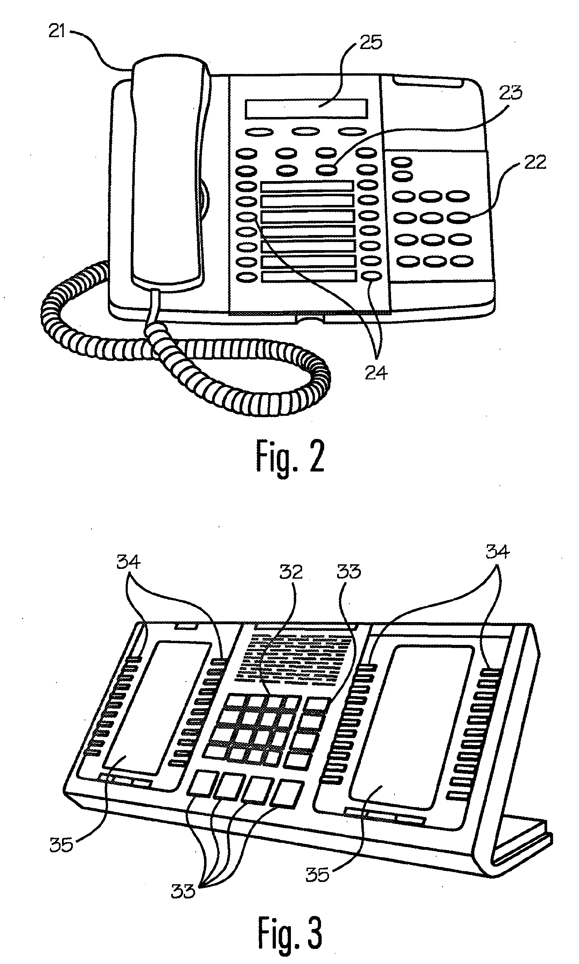

Figure 2 shows a telephone device (e.g. a model 5220 IP phone manufactured by Mitel Networks Corporation) including a handset 21, keypad 22, a plurality of fixed function keys 23, a plurality of configurable softkeys 24 and a display screen 25. Each of the softkeys 24 is associated with a behaviour/feature that is indicated by a label or icon on the display 25.

Figure 3 shows a trading turret appliance having a keypad 32, a plurality of fixed function keys 33, display screens 35, and configurable softkeys 34, a plurality of which may be configured as 'float keys' (e.g. the center six softkeys, three on one side of each display 35).

In accordance with an aspect of an embodiment set forth herein, softkey configurations (e.g. for the telephone devices of Figure 2 and 3), may be stored in one or more softkey profiles within the iPBX 1, such as shown in the example of Table 1. The configurations may be user configurable or non-configurable on a selective or system-wide basis. Although not shown in Table 1, the absence of a softkey profile (or a predefined value) for any device indicates that normal system handling applies to the softkeys.

**Table 1:**

| Multiline IP Set Configuration | | | | |
|---|---|---|---|---|
| Device Id | Device Type | Number | Line Type | Softkey Profile |
| 1 | 5220 IP | 3245 | Single Line | 1 |
| 2 | 5320 IP | 3272 | Single Line | 1 |
| 3 | Turret | 3276 | Single Line | 2 |

Softkey profiles may be administrator configurable for each device and/or groups of devices to provide available programmable keys and/or system and/or application features, as shown in the examples of Tables 2 and 3.

**Table 2:**

| Softkey Profile Id = 1 | | | |
|---|---|---|---|
| Softkey | Behaviour | Management Algorithm | Conflict Resolution |
| 1 | Application Key | application controlled | available for mandatory |
| 2 | Music On/Off | system controlled | system softkey ignored |
| 3 | Access Voicemail | context independent | system softkey ignored |
| 4 | | system controlled | available for mandatory |
| 5 | | system controlled | available for mandatory |
| 6 | | system controlled | system softkey presented |

The softkey profile specifies a behaviour, management algorithm and conflict resolution for each softkey position. The softkey management algorithm is executed for classifying each available softkey as being one of either context independent, system controlled or application controlled. Thus, in Table 2 (applicable to configuration of softkeys for IP phones 5 and 7), the softkey profile specifies that the first softkey position functions as an Application Key, for launching an application (e.g. an application on desktop computer 10). Thus, the management algorithm for control of that softkey is "application controlled", because the iPBX 1 does not control the feature behaviour but rather passes control to an application that has registered with the iPBX 1 for control of the feature. The conflict resolution for that softkey is "available for mandatory", indicating that the first softkey position is available for allocation to a required system feature (e.g. the "cancel" function), and will displace the application key if no other softkey positions are available for the required system feature.

The softkey profile of Table 2 specifies that the second softkey position functions as a Music On/Off key, for enabling or disabling music (e.g. music played through a speaker). The management algorithm for control of the softkey is "system controlled", because the iPBX 1 controls the feature behaviour. The conflict resolution for that softkey is "system softkey ignored", indicating that in the event of a conflict between the desired system-controlled behaviour (i.e. Music On/Off) and any higher priority behaviour not already assigned to a softkey, the higher priority behaviour will displace the desired behaviour at that softkey position and the system will not attempt to find a new softkey position for the desired system-controlled behaviour.

The fourth, fifth and sixth softkey positions in the example of Table 2 are blank, indicating that those softkey positions are available for system control. The conflict resolution method specified for the sixth softkey position is "system softkey presented", which indicates that in the event of a conflict between the desired system-controlled behaviour and any higher priority behaviour not already assigned to a softkey, the desired system-controlled behaviour will be presented.

**Table 3:**

| Softkey Profile Id = 2 | | | |
|---|---|---|---|
| Softkey | Behaviour | Management Algorithm | Conflict Resolution |
| 1 | Float key | application controlled | available for mandatory |
| 2 | Float key | application controlled | system softkey ignored |
| 3 | Float key | application controlled | available for mandatory |
| 4 | Float key | application controlled | system softkey ignored |
| 5 | Float key | application controlled | system softkey ignored |
| 6 | Float key | application controlled | system softkey ignored |

In Table 3 (applicable to configuration of softkeys for the trading turret 9), all of the softkey positions are indicated as being application controlled float keys, with various specified conflict resolution methods (i.e. system softkey presented, available for mandatory or system softkey ignored). It should be noted that whereas Table 3 shows only six softkeys, a total of twelve such keys are available on the turret device of Figure 3, wherein the remaining six softkeys are configured similarly to the softkeys in Table 3.

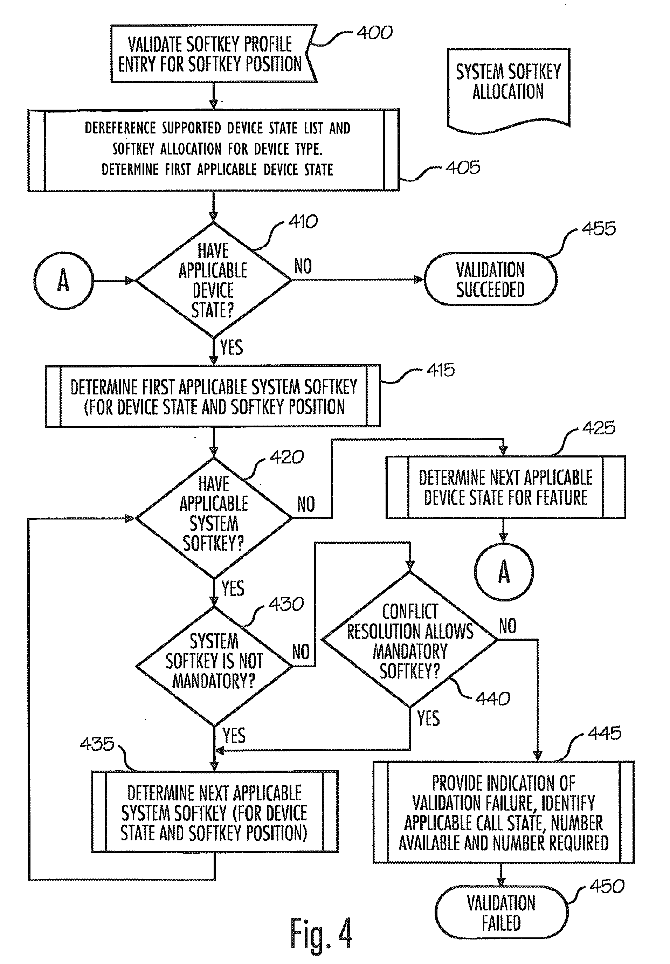

Turning to Figure 4, an exemplary method is set forth for validation of a softkey profile configuration during system softkey allocation of a telephone device. When validating a softkey profile for a particular desired feature to be implemented at a particular softkey position (400), for example via administrator population of fields in a system softkey allocation table presented to the administrator on administrator console 11, the iPBX 1 first dereferences the supported device state list (i.e. Idle, Busy, Ringing, etc.) and system softkey allocation for the device type, and selects a first one of the device states (405). Upon determining the first device state (i.e. a "Yes" at 410), the system determines the first applicable system softkey (if any) for that softkey position when the device is in the first device state (415). If there is no system softkey for that softkey position and device state (i.e. a "No" at 420), the system determines the next applicable device state for the desired feature (425), and returns to 410.

If there is an applicable system softkey (i.e. a "yes" at 420), but the system softkey is not mandatory for the indicated device state (i.e. a "Yes" at 430) then the system checks the next available system softkey feature applicable to that softkey position and device state (435) and 420 is then repeated.

If the system softkey is, in fact, mandatory for the indicated device state (i.e. a "No" at 430) then conflict resolution is performed (i.e. apply one of either system softkey presented, available for mandatory or system softkey ignored) to determine whether to allocate the mandatory system softkey (i.e. a "Yes" at 440), or indicate (445) that a validation failure has occurred (450) because of a conflict between the desired feature allocation and mandatory system softkey.

Once all of the device states and system softkeys have been considered (i.e. a "No" at 410), then validation of the desired feature allocation to the particular softkey position is deemed to have been successful (455).

An exemplary system allocation table is shown in Table 4 for specifying the behaviour of the various softkeys on a particular device (i.e. the model 5220 IP phone 5) in different device states. It will be noted that the first softkey position is shown as being allocated to two different features in the Idle device state (Phonebook and Speal@Ease). However, since that softkey position does not require a mandatory system feature then, as discussed above, iPBX 1 resolves the conflict by presenting the 'Speak@Ease' softkey (thereby overriding and displacing the Phonebook feature) if the 'Speak@Ease' feature has been configured. Otherwise, the 'Phonebook' softkey is presented at the identical softkey position when the set is in the Idle state.

**Table 4:**

| System Softkey Allocation (for Device Type i.e. 5220 Family devices) | | | |
|---|---|---|---|
| Device State | Prefered Softkey # | Behaviour | Mandatory |
| Idle | 1 | Phonebook | No |
| Idle | 1 | Speak@Ease | No |
| Idle | 2 | Redial | No |
| Idle | 3 | Hotdesk | Yes |
| Dialling | 1 | Back Arrow | Yes |
| Dialling | 6 | New Call | Yes |
| Ringing | 3 | Force Forward | No |
| etc... | | | |
| | | | |
| | | | |

From the foregoing it will be appreciated that, for each device state one or more system softkey tables is maintained to identify each potential context specific behaviour/feature and its associated softkey position as well as an indication of whether the behaviour/feature is mandatory or optional. For example, in the Dialing state '←' (Back Arrow) is mandatory whereas 'Phonebook' is optional.

Identification of mandatory/optional behaviours/features is pre-determined for each device type (or group of device types) based on existing support and/or during feature development. In making such a determination of mandatory softkeys, consideration must be given to the availability of equivalent behaviours/features using other capabilities for a given device type (e.g. hard keys) and TUI usability issues. While configuration control of mandatory/optional softkey identification is possible, this is not normally considered to be desirable because telephone operation may be unintentionally impacted.

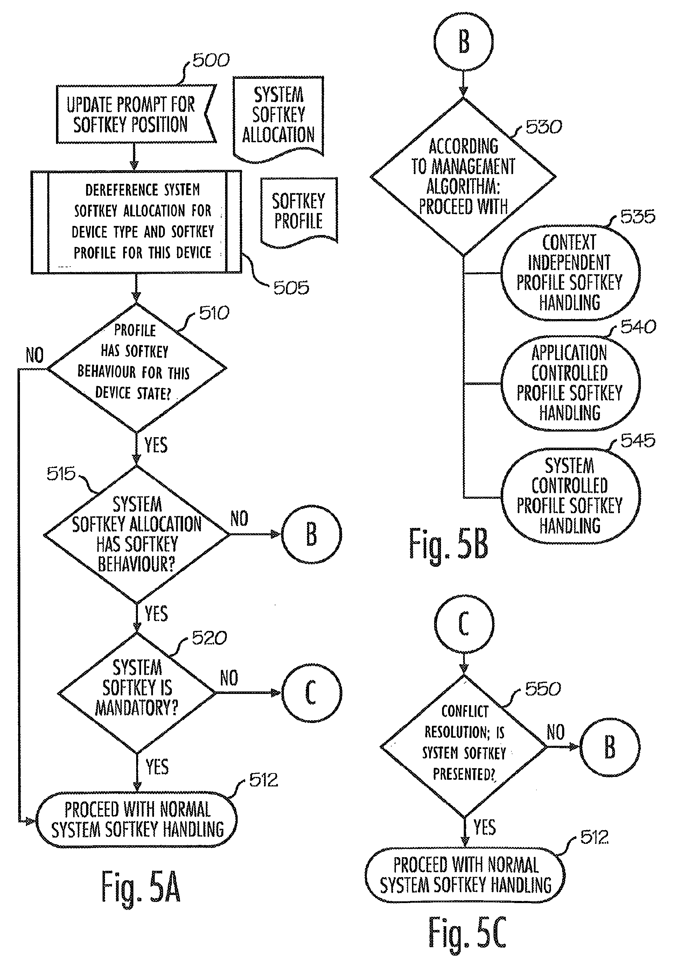

Presentation of softkeys at the device is determined, as shown in Figure 5, on the basis of the associated softkey profile configuration validated according to the steps set forth in Figure 4. Thus, upon a change of device state the softkey behaviour/feature must be updated at each softkey position. For a given softkey position update (500), the system dereferences any system softkey allocation applicable to the specific device type (in Table 4) as well as the softkey profile (505) associated with the device (in Table 1) or otherwise associated (e.g. softkey profile configuration applicable to the specific device type). If the profile does not include any softkey behaviour for the current device state (i.e. a "No" at 510), then normal system softkey handling ensues (512). Otherwise, if the profile does include a softkey behaviour for the current device state (i.e. a "Yes" at 510), then if the system softkey allocation indicates softkey behaviour (i.e. a "Yes" at 515) and the allocated system softkey is mandatory (i.e. a "Yes" at 520), then normal system softkey handling ensues (512). If no system softkey behaviour is indicated (i.e. a "No" at 515), then presentation of the softkey proceeds according to the associated management algorithm (530). That is, the softkey is displayed according to one of: context independent profile softkey handling (535), application controlled profile softkey handling (540) or system controlled profile softkey handling (545). If softkey behaviour is indicated (i.e. a "Yes" at 515), but the allocated system softkey is not mandatory (i.e. a "No" at 520), then conflict resolution is performed (see step 440 of Figure 4), resulting in either presentation of the system softkey (i.e. a "Yes" at 550), followed by normal system softkey handling (512), or presentation of the softkey according to the associated management algorithm (530).

Once the resultant softkey has been determined according to the methodology of Figure 4, the managed softkey array (e.g. Tables 2 and 3) is updated for the given device. The softkey to be presented as a result of the methodology of Figure 5 is transmitted to the physical/virtual device (e.g. telephone device 5 or 7, trading turret 9, desktop phone application at computer 10, etc) for presentation to the user in a MiNET (or equivalent) message. Additional indications may be provided to the device that can be used, optionally, to provide visual indication that the softkey is under system / user / or application control.

Once the device has been updated with all applicable softkeys, pressing of a softkey on the physical/virtual device is handled in a well known manner for the associated behaviour/feature identified in the managed softkey array for the device.

The foregoing description of a preferred embodiment is not intended to be limiting. Other embodiments, variations and applications are possible. For example, it is contemplated that an application may control the device softkeys statically and/or dynamically via the configured softkey management algorithm (with a value identifying the controlling application). The iPBX 1 may act as a proxy for the application or provide indication to the device in the softkey message that an application has control until the next softkey update. Any combination of device state / softkey profile / softkey configuration can be used to increase (or decrease) configuration flexibility (e.g. designating a single softkey profile to apply regardless of device state). It is also contemplated that additional and/or alternative conflict resolution methods may be implemented (i.e. to permit moving behaviours between different softkey positions and thereby allow more flexibility when handling mandatory softkey conflicts), as well as additional and/or alternative management algorithms. Also, the principles set forth herein may be extended to programmable line keys (for example, making the first page of programmable line keys on the turret appliance 9 into managed softkeys, primarily for use as "float keys"). The principles set forth herein may also be extended to management of context specific choices where more than one behaviour/feature is appropriate for a single selection interface (e.g. control panel interfaces for a multi-room multi-source stereo system with a limited number of buttons providing access to a considerably larger number of context specific and context independent behaviours/features).

Many features and advantages will be apparent from the detailed specification and, thus, it is intended by the appended claims to cover all such features and advantages. Further, since numerous modifications and changes will readily occur to those skilled in the art, it is not desired to impose any limitation to the exact construction and operation illustrated and described, and accordingly all suitable modifications and equivalents may be resorted to, falling within the scope of the claims.

## Claims

1. A method of configuring and presenting softkeys on a device (5), comprising creating a softkey profile for assigning a feature to a softkey (24) on said device (5) for each of a plurality of device states; and
presenting said softkey (24) on said device (5) for each of said device states;
**characterized in that**:
creating said softkey profile includes dereferencing a list of supported device states and system softkey allocation for the device type (405) and, for each said device state:
i) determining an applicable system softkey for a softkey position in the device state (415);
ii) determining whether said applicable system softkey is mandatory for the device state (430);
iii) if said applicable system softkey is mandatory, performing conflict resolution (440) on any softkey availability conflict between said feature and said applicable system softkey to determine whether said applicable system softkey is to be allocated to the softkey position in the device state and, if said applicable system softkey is not to be allocated to the softkey position in the device state, indicating that a failure has occurred (445); and
iv) determining a next applicable system softkey for the softkey position in the device state (435) and repeating steps ii) and iii) for the next applicable system softkey.

2. The method of claim 1, wherein presenting said softkey includes implementing a softkey management algorithm for managing presentation of context specific features for each said softkey (24).

3. The method of claim 2, wherein said softkey management algorithm classifies each available softkey (24, 34) as one of either context independent, system controlled or application controlled.

4. The method of claim 1 or 2, wherein presenting said softkey includes dereferencing each system softkey allocation and each softkey profile for said device and, for each said softkey position in the device state:
i) determining whether said softkey profile indicates a softkey feature (510);
ii) if said system softkey allocation indicates a system softkey feature (515) then determining whether said system softkey is mandatory (520) and in the event said system softkey is not mandatory then performing conflict resolution to determine whether said system softkey is to be presented, if said system softkey is to be presented then presenting said system softkey, and, if said system softkey is not to be presented, implementing a softkey management algorithm for managing presentation of context specific features for said softkey; and
iii) if said softkey profile does not indicate a softkey feature then performing normal system softkey handling (512).

5. The method of claim 4, wherein said softkey management algorithm (530) classifies each available softkey (24, 34) as one of either context independent (535), system controlled (545) or application controlled (540) and presents each available softkey in accordance therewith.

6. A communication system, comprising:
a plurality of devices (5, 7, 9, 10, 11), each having a plurality of softkeys (24, 34) for implementing features; and
a controller (1) connected to said devices (5, 7, 9, 10, 11) for creating a softkey profile to assign a predetermined feature to a softkey (24, 34) on each said device (5, 7, 9, 10, 11) for each of a plurality of device states, and presenting said softkey (24, 34) on each said device (5, 7, 9, 10, 11 ) for each of said device states;
**characterized by**:
the controller (1) being configured to, when creating the softkey profile, dereference a list of supported device states and system softkey allocation for the device type (405) and, for each said device state,
i) determine an applicable system softkey for a softkey position in the device state (415);
ii) determine whether said applicable system softkey is mandatory for the device state (430);
iii) if said applicable system softkey is mandatory, perform conflict resolution (440) on any softkey availability conflict between said feature and said applicable system softkey to determine whether said applicable system softkey is to be allocated to the softkey position in the device state and, if said applicable system softkey is not to be allocated to the softkey position in the device state, indicate that a failure has occurred (445); and
iv) determine a next applicable system softkey for the softkey position in the device state (435) and repeat steps ii) and iii) for the next applicable system softkey.

7. The communication system of claim 6, wherein said controller (1) includes a softkey management mechanism for managing presentation of context specific features for each said softkey (24, 34).

8. The communication system of claim 7, wherein said softkey management mechanism classifies each available softkey (24, 34) as one of either context independent, system controlled or application controlled.

9. The communication system of claim 6, 7 or 8, wherein at least one of said devices (5, 7, 9, 10, 11) is an IP phone (5, 7).

10. The communication system of any of claims 6 to 9, wherein at least one of said devices (5, 7, 9, 10, 11) is a trading turret (9).

11. The communication system of any of claims 6 to 10, wherein at least one of said devices (5, 7, 9, 10, 11) is a phone application executed on a computer (10).

12. The communication system of any of claims 6 to 11, wherein said plurality of softkeys (24, 34) comprises a plurality of programmable line keys (34).

13. The communication system of claim 10, wherein said plurality of softkeys (24, 34) comprises a plurality of programmable line keys (34) wherein a first page of said programmable line keys (34) function as float keys.

14. The communication system of any of claims 6 to 13, wherein said controller (1) is an iPBX.

15. The communication system of any of claims 6 to 14, wherein at least one of said devices is a control panel interface for a multi-media system providing access via said softkeys to context specific features and context independent features.

## Patentansprüche

1. Verfahren zum Konfigurieren und Darstellen von Softkeys auf einer Vorrichtung (5), umfassend
Erzeugen eines Softkeyprofils zum Zuweisen eines Merkmals zu einer Softkey (24) auf der Vorrichtung (5) für jeden von mehreren Vorrichtungszuständen; und
Darstellen der Softkey (24) auf der Vorrichtung (5) für jeden der Vorrichtungszustände;
**dadurch gekennzeichnet, dass**:
Erzeugen des Softkeyprofils umfasst Dereferenzieren einer Liste von unterstützten Vorrichtungszuständen und einer Systemsoftkeyzuweisung für die Vorrichtungsart (405), und für jeden der Vorrichtungszustände:
i) Bestimmen einer anwendbaren Systemsoftkey für eine Softkeyposition in dem Vorrichtungszustand (415);
ii) Bestimmen, ob die anwendbare Systemsoftkey verbindlich für den Vorrichtungszustand (430) ist;
iii) wenn die anwendbare Systemsoftkey verbindlich ist, Durchführen einer Konfliktlösung (440) auf jeden Softkeyverfügbarkeitskonflikt zwischen dem Merkmal und der anwendbaren Systemsoftkey, um zu bestimmen, ob die anwendbare Systemsoftkey der Softkeyposition in dem Vorrichtungszustand zugeordnet werden soll, und, wenn die anwendbare Systemsoftkey nicht der Softkeyposition in dem Vorrichtungszustand zugeordnet werden soll, Anzeigen, dass ein Fehler aufgetreten ist (445); und
iv) Bestimmen einer nächsten anwendbaren Systemsoftkey für die Softkeyposition in dem Vorrichtungszustand (435) und Wiederholen der Schritte ii) und iii) für die nächste anwendbare Systemsoftkey.

2. Verfahren nach Anspruch 1, bei welchem Darstellen der Softkey Implementieren eines Softkeyverwaltungsalgorithmus zum Verwalten einer Darstellung von zusammenhangsspezifischen Merkmalen für jede der Softkeys (24) umfasst.

3. Verfahren nach Anspruch 2, bei welchem der Softkeyverwaltungsalgorithmus jede verfügbare Softkey (24, 34) als eine von entweder zusammenhangsunabhängigen, systemgesteuerten oder anwendungsgesteuerten klassifiziert.

4. Verfahren nach einem der Ansprüche 1 oder 2, bei welchem Darstellen der Softkey umfasst Dereferenzieren jeder Systemsoftkeyzuordnung und jedes Softkeyprofils für diese Vorrichtung, und für jede Softkeyposition in dem Vorrichtungszustand:
(i) Bestimmen, ob das Softkeyprofil ein Softkeymerkmal (510) anzeigt;
(ii) wenn die Systemsoftkeyzuordnung ein Systemsoftkeymerkmal (515) anzeigt, dann Bestimmen, ob die Systemsoftkey verbindlich ist (520) und im Fall, dass die Systemsoftkey nicht verbindlich ist, dann Durchführen einer Konfliktlösung, um zu bestimmen, ob die Systemsoftkey dargestellt werden soll, wenn die Systemsoftkey dargestellt werden soll, dann Darstellen der Systemsoftkey, und wenn die Systemsoftkey nicht dargestellt werden soll, Implementieren eines Softkeyverwaltungsalgorithmus zum Verwalten einer Darstellung von zusammenhangspezifischen Merkmalen für die Softkey; und
(iii) wenn das Softkeyprofil ein Softkeymerkmal nicht anzeigt, dann Durchführen normaler Systemsoftkeyhandhabung (512).

5. Verfahren nach Anspruch 4, bei welchem der Softkeyverwaltungsalgorithmus (530) jede verfügbare Softkey (24, 34) als eine entweder zusammenhangsunabhängige (535), systemgesteuerte (545) oder anwendungsgesteuerte (540) klassifiziert und jede verfügbare Softkey entsprechend darstellt.

6. Kommunikationssystem, umfassend:
mehrere Vorrichtungen (5, 7, 9, 10, 11), von denen jede mehrere Softkeys (24, 34) zum Implementieren von Merkmalen aufweist; und
ein Steuerelement (1), das mit den Vorrichtungen (5, 7, 9, 10, 11) zum Erzeugen eines Softkeyprofils, um einer Softkey (24, 34) auf jeder Vorrichtung (5, 7, 9, 10, 11) ein vorbestimmtes Merkmal für jeden von mehreren Vorrichtungszuständen zuzuweisen, und Darstellen der Softkey (24, 34) auf jeder der Vorrichtungen (5, 7, 9, 10, 11) für jeden der Vorrichtungszustände verbunden ist;
**gekennzeichnet durch**:
das Steuerelements (1), das konfiguriert ist, beim Erzeugen des Softkeyprofils eine Liste von unterstützten Vorrichtungszuständen und Systemsoftkeyzuordnung für die Vorrichtungsart (405) zu dereferenzieren, und für jeden der Vorrichtungszustände zum
i) Bestimmen einer anwendbaren Systemsoftkey für eine Softkeyposition in dem Vorrichtungszustand (415);
ii) Bestimmen, ob die anwendbare Systemsoftkey für den Vorrichtungszustand (430) verbindlich ist;
iii) wenn die anwendbare Systemsoftkey verbindlich ist, Durchführen einer Konfliktlösung (440) auf irgendeinem Softkeyverfügbarkeitskonflikt zwischen dem Merkmal und der anwendbaren Systemsoftkey, um zu bestimmen, ob die anwendbare Systemsoftkey der Softkeyposition in dem Vorrichtungszustand zugeordnet werden soll, und wenn die anwendbare Systemsoftkey nicht der Softkeyposition in dem Vorrichtungszustand zugeordnet werden soll, Anzeigen, dass ein Fehler aufgetreten ist (445); und
iv) Bestimmen einer nächsten anwendbaren Systemsoftkey für die Softkeyposition in dem Vorrichtungszustand (435) und Wiederholen der Schritte ii) und iii) für die nächste anwendbare Systemsoftkey.

7. Kommunikationssystem nach Anspruch 6, bei welchem das Steuerelement (1) einen Softkeyverwaltungsmechanismus zum Verwalten einer Darstellung von zusammenhangsspezifischen Merkmalen für jede der Softkeys (24, 34) umfasst.

8. Kommunikationssystem nach Anspruch 7, bei welchem der Softkeyverwaltungsmechanismus jede verfügbare Softkey (24, 34) als eine entweder zusammenhangsunabhängige, systemgesteuerte oder anwendungsgesteuerte klassifiziert.

9. Kommunikationssystem nach einem der Ansprüche 6, 7 oder 8, bei welchem wenigstens eine der Vorrichtungen (5, 7, 9, 10, 11) ein IP-Telefon (5, 7) ist.

10. Kommunikationssystem nach einem der Ansprüche 6 bis 9, bei welchem wenigstens eine der Vorrichtungen (5, 7, 9, 10, 11) eine Handelskommunikationsplattform (9) ist.

11. Kommunikationssystem nach einem der Ansprüche 6 bis 10, bei welchem wenigstens eine der Vorrichtungen (5, 7, 9, 10, 11) eine Telefonanwendung ist, die auf einem Computer (10) ausgeführt wird.

12. Kommunikationssystem nach einem der Ansprüche 6 bis 11, bei welchem die mehreren Softkeys (24, 34) mehrere programmierbare Leitungstasten (34) umfassen.

13. Kommunikationssystem nach Anspruch 10, bei welchem die mehreren Softkeys (24, 34) mehrere programmierbare Leitungstasten (34) umfassen, wobei eine erste Seite der programmierbaren Leitungstasten (34) als Floatkeys funktionieren.

14. Kommunikationssystem nach einem der Ansprüche 6 bis 13, bei welchem das Steuerelement (1) ein IP PBX ist.

15. Kommunikationssystem nach einem der Ansprüche 6 bis 14, bei welchem wenigstens eine der Vorrichtungen ein Steuerpaneelinterface für ein Multimediasystem ist, das Zugang zu zusammenhangsspezifischen Merkmalen und zusammenhangsunabhängigen Merkmalen über die Softkeys bereitstellt.

## Revendications

1. Procédé permettant de configurer et de présenter des touches programmables sur un dispositif (5), comprenant les étapes consistant à :
créer un profil de touche programmable pour assigner une fonction à une touche programmable (24) sur ledit dispositif (5) pour chaque état d'une pluralité d'états du dispositif ; et
présenter ladite touche programmable (24) sur ledit dispositif (5) pour chacun desdits états du dispositif ;
**caractérisé en ce que** :
la création dudit profil de touche programmable comprend l'étape consistant à déréférencer une liste d'états du dispositif pris en charge et d'attributions de touches programmables de système pour le type de dispositif (405) et, pour chacun desdits états de l'appareil les étapes consistant à :
i) déterminer une touche programmable du système pertinente pour une position de touche programmable dans l'état du dispositif (415) ;
ii) déterminer si ladite touche programmable du système pertinente est obligatoire pour l'état du dispositif (430) ;
iii) si ladite touche programmable du système pertinente est obligatoire, effectuer une résolution de conflit (440) pour tout conflit de disponibilité de touche programmable entre ladite fonction et ladite touche programmable du système pertinente pour déterminer si ladite touche programmable du système pertinente doit être attribuée à la position de touche programmable dans l'état du dispositif et, si ladite touche programmable du système pertinente ne doit pas être attribuée à la position de touche programmable dans l'état du dispositif, indiquer qu'un échec a eu lieu (445), et
iv) déterminer une touche programmable du système pertinente suivante pour la position de la touche programmable dans l'état du dispositif (435) et répéter les étapes ii) et iii) pour la touche programmable du système pertinente suivante.

2. Procédé selon la revendication 1, dans lequel la présentation de ladite touche programmable comprend la mise en oeuvre d'un algorithme de gestion de touche programmable pour gérer la présentation des fonctions spécifiques au contexte, pour chacune desdites touches programmables (24).

3. Procédé selon la revendication 2, dans lequel ledit algorithme de gestion de touche programmable classe chaque touche programmable disponible (24, 34) comme étant soit indépendante du contexte, soit commandée par un système, soit commandée par une application.

4. Procédé selon la revendication 1 ou 2, dans lequel l'étape consistant à présenter ladite touche programmable comprend l'étape consistant à déréférencer chaque attribution de touche programmable du système et chaque profil de touche programmable pour ledit dispositif et, pour chacune desdites positions de touche programmable dans l'état du dispositif les étapes consistant à :
i) déterminer si ledit profil de touche programmable indique une fonction de touche programmable (510) ;
ii) si ladite attribution de touche programmable du système indique une fonction de touche programmable du système (515), alors déterminer si ladite touche programmable du système est obligatoire (520) et dans le cas où ladite touche programmable du système n'est pas obligatoire, alors effectuer une résolution de conflit afin de déterminer si ladite touche programmable du système doit être présentée, si ladite touche programmable du système doit être présentée, alors présenter ladite touche programmable du système, et, si ladite touche programmable du système ne doit pas être présentée, mettre en oeuvre un algorithme de gestion de touche programmable pour gérer la présentation de fonctions spécifiques au contexte pour ladite touche programmable, et
iii) si ledit profile de touche programmable n'indique pas une fonction de touche programmable alors effectuer une manipulation normale des touches programmables du système (512).

5. Procédé selon la revendication 4, dans lequel ledit algorithme de gestion de touche programmable (530) classe chaque touche programmable disponible (24, 34) comme étant soit indépendante du contexte (535), soit commandée par un système (545), soit commandée par une application (540) et présente chaque touche programmable disponible conformément à cela.

6. Système de communication, comprenant :
une pluralité de dispositifs (5, 7, 9, 10, 11), chacun ayant une pluralité de touches programmables (24, 34) pour mettre en oeuvre des fonctionnalités:
et
un contrôleur (1) relié auxdits dispositifs (5, 7, 9, 10, 11) pour créer un profil de touche programmable pour assigner une fonction prédéterminée à une touche programmable (24, 34) sur chacun desdits dispositifs (5, 7, 9, 10, 11) pour chacun des états d'une pluralité d'états du dispositifs, et présenter ladite touche programmable (24, 34) sur chacun desdits dispositifs (5, 7, 9, 10, 11) pour chacun desdits états du dispositifs ;
**caractérisée en ce que** :
le contrôleur (1) est configuré pour, lors de la création du profil de touche programmable, déréférencer une liste d'états du dispositif pris en charge et d'attributions de touches programmables du système pour le type de dispositif (405) et, pour chacun desdits états du dispositif,
i) déterminer une touche programmable du système pertinente pour une position de touche programmable dans l'état du dispositif (415) ;
ii) déterminer si ladite touche programmable du système pertinente est obligatoire pour l'état du dispositif (430) ;
iii) si ladite touche programmable du système pertinente est obligatoire, effectuer une résolution de conflit (440) pour tout conflit de disponibilité de touche programmable entre ladite fonction et ladite touche programmable du système pertinente pour déterminer si ladite touche programmable du système pertinente doit être attribuée à la position de touche programmable dans l'état du dispositif et, si ladite touche programmable du système pertinente ne doit pas être attribuée à la position de touche programmable dans l'état du dispositif, indiquer qu'un échec a eu lieu (445), et
iv) déterminer une touche programmable du système pertinente suivante pour la position de la touche programmable dans l'état du dispositif (435) et répéter les étapes ii) et iii) pour la touche programmable du système pertinente suivante.

7. Système de communication selon la revendication 6, dans lequel ledit contrôleur (1) comprend un mécanisme de gestion de touche programmable pour gérer la présentation de fonctions spécifiques au contexte pour chacune desdites touches programmables (24, 34).

8. Système de communication selon la revendication 7, dans lequel ledit mécanisme de gestion de touche programmable classe chacune des touches programmables disponibles (24, 34) comme étant soit indépendante du contexte, soit commandée par un système, soit commandée par une application.

9. Système de communication selon la revendication 6, 7 ou 8, dans lequel au moins un desdits dispositifs (5, 7, 9, 10, 11) est un téléphone IP (5, 7).

10. Système de communication selon l'une quelconque des revendications 6 à 9, dans lequel au moins un desdits dispositifs (5, 7, 9, 10, 11) est un terminal / central d'appel (9).

11. Système de communication selon l'une quelconque des revendications 6 à 10, dans lequel au moins un desdits dispositifs (5, 7, 9, 10, 11) est une application pour téléphone exécutée sur un ordinateur (10).

12. Système de communication selon l'une quelconque des revendications 6 à 11, dans lequel ladite pluralité de touches programmables (24, 34) comporte une pluralité de touches de ligne programmables (34).

13. Système de communication selon la revendication 10, dans lequel ladite pluralité de touches programmables (24, 34) comporte une pluralité de touches de ligne programmables (34) dans lequel une première page desdites touches de ligne programmables (34) fonctionnent comme des touches flottantes.

14. Système de communication selon l'une quelconque des revendications 6 à 13, dans lequel ledit contrôleur (1) est un autocommutateur IP « iPBX ».

15. Système de communication selon l'une quelconque des revendications 6 à 14, dans lequel au moins un desdits dispositifs est une interface de panneau de commande pour un système multi-média fournissant un accès via lesdites touches programmables vers des fonctions spécifiques au contexte et des fonctions indépendantes du contexte.
